# EUROPEAN PATENT APPLICATION

(11) **EP 4 821 577 A1**
(43) Date of publication of application: **14.10.2026**
(21) Application number: 24916999.6
(22) Date of filing: 05.12.2024
(51) Int. Cl.: B01D 7/02, C07C 51/43, C08J 11/10

(54) **STORAGE SYSTEM**

(30) Priority: 11.01.2024 JP 2024002801
(71) Applicant: Mitsubishi Heavy Industries, Ltd., Chiyoda-ku Tokyo 100-8332 (JP)
(72) Inventor: MATSUBARA, Wataru, Tokyo 100-8332 (JP); MIYATA, Yasuyuki, Tokyo 100-8332 (JP); GENTA, Minoru, Tokyo 100-8332 (JP); ITO, Motofumi, Tokyo 100-8332 (JP)
(74) Representative: Studio Torta S.p.A.
(86) International application number: PCT/JP2024/043006
(87) International publication number: WO 2025/150314

(57) **Abstract**

A liquid containing an object is appropriately stored. A storage system includes a solution vessel that stores a target liquid containing an object in a liquid state, a gas discharge pipe that is connected to the solution vessel and discharges gas in the solution vessel, and a cooling mechanism that cools a partial section of the gas discharge pipe to precipitate the object in a gaseous state contained in the gas as a solid.

## Description

### Field

The present disclosure relates to a storage system.

### Background

A technique for separating and extracting an object from a liquid containing the object is known. Patent Literature 1 describes a technique for cooling a carboxylic acid-containing liquid to crystallize and extract a carboxylic acid.

### Citation List

### Patent Literature

Patent Literature 1: WO 2007/088981 A

### Summary

### Technical Problem

For example, in a vessel that stores a liquid containing an object, a pipe that discharges gas in the vessel may be provided. A vaporized object may also flow through this pipe, and when the vaporized object is cooled due to an influence of an external environment or the like, the object may solidify and precipitate in the pipe, potentially blocking the pipe. This may make it impossible to appropriately store the liquid containing the object.

The present disclosure solves the above-described problem, and an object thereof is to provide a storage system capable of appropriately storing a liquid containing an object.

### Solution to Problem

To solve the above-described problem and achieve the above object, a storage system according to the present disclosure includes: a solution vessel that stores a target liquid containing an object in a liquid state; a gas discharge pipe that is connected to the solution vessel and discharges gas in the solution vessel; and a cooling mechanism that cools a partial section of the gas discharge pipe to precipitate the object in a gaseous state contained in the gas as a solid.

### Advantageous Effects of Invention

According to the present disclosure, a liquid containing an object can be appropriately stored.

### Brief Description of Drawings

FIG. 1 is a schematic diagram of a polyester recycling process in the present embodiment.
FIG. 2 is a schematic diagram of a separation system according to the present embodiment.
FIG. 3 is a schematic diagram illustrating a storage system according to a first embodiment.
FIG. 4 is a schematic cross-sectional view of a cooling mechanism according to the first embodiment.
FIG. 5 is a schematic diagram illustrating a storage system according to a second embodiment.
FIG. 6 is a schematic diagram illustrating a storage system according to a third embodiment.
FIG. 7 is a schematic cross-sectional view of a removal mechanism according to the third embodiment.
FIG. 8 is a schematic cross-sectional view of a storage system according to a modification of the third embodiment.
FIG. 9 is a schematic diagram illustrating a storage system according to a fourth embodiment.
FIG. 10 is a schematic cross-sectional view of a cooling mechanism according to a fifth embodiment.

### Description of Embodiments

Hereinafter, a preferred embodiment of the present invention will be described in detail with reference to the accompanying drawings. Note that the present invention is not limited by the embodiment, and in a case where there are multiple embodiments, the present invention includes a combination of the embodiments.

### (Recycling process)

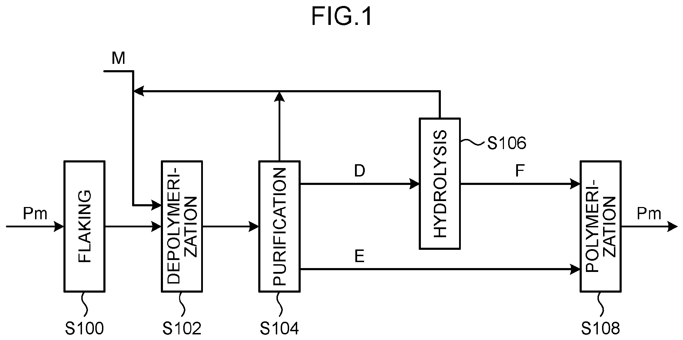

FIG. 1 is a schematic diagram of a polyester recycling process in the present embodiment. In the present embodiment, a process of recycling (regenerating) a polyester raw material Pm is performed by depolymerizing the polyester raw material Pm to form a monomer and polymerizing the monomer again. Specifically, as illustrated in FIG. 1, the polyester raw material Pm is flaked (step S100), a dissolution liquid is mixed with a reaction solvent M to depolymerize the flaked material (step S102), a monomer of the depolymerized polyester is purified (separated) to produce a monomer D derived from a carboxylic acid and a monomer E of an alcohol component (step S104), the monomer D is hydrolyzed to separate the reaction solvent M (step S106), and a monomer F produced by hydrolysis of the monomer D and the monomer E are polymerized (step S108) to regenerate the polyester raw material Pm. Note that, in the recycling process in which a separation system 1 of the present embodiment is adopted, flaking in step S100 may be omitted, or only processing of recovering the monomers D and E illustrated in step S104 and the monomer F illustrated in step S106 may be performed without performing up to processing of repolymerization as in step S108.

### (Polyester raw material)

The polyester raw material Pm to be depolymerized in the present embodiment is a substance containing polyester. The polyester raw material Pm is not particularly limited, and examples thereof include waste products such as polyethylene terephthalate (PET), polyethylene butylene terephthalate (PEBT), polybutylene terephthalate (PBT), polycyclohexane dimethyl terephthalate (PCT), polyethylene naphthalate (PEN), polybutylene naphthalate (PBN), and polycarbonate (PC). The polyester raw material Pm is not limited to those containing only a polyester component, but also contains components other than the polyester component. Examples of components other than polyester contained in the polyester raw material Pm include plastics such as polyethylene, polystyrene, polypropylene, and polyvinyl chloride other than polyester, metals, dyes, pigments, and polymerization catalysts. Clothing in which polyester and other components are woven into a fibrous form is also exemplified as the polyester raw material Pm. Hereinafter, components other than polyester contained in the polyester raw material Pm are referred to as impurities.

### (Reaction solvent)

The reaction solvent M is a solvent that reacts with polyester to depolymerize the polyester. The reaction solvent M may be, for example, at least one of methanol, ethanol, water, and ethylene glycol.

### (Monomer derived from carboxylic acid)

The monomer D derived from a carboxylic acid is a monomer having a carboxyl group, produced by a depolymerization reaction of polyester. The monomer D may be, for example, dimethyl carboxylate or diethyl carboxylate. More specifically, the monomer D is preferably a monomer of terephthalic acid, and may be, for example, dimethyl terephthalate (DMT).

### (Monomer of alcohol component)

The monomer E of an alcohol component is a monomer of an alcohol component, produced by the depolymerization reaction of polyester. The monomer E may be, for example, a dihydroxy compound (dihydric alcohol), and more specifically, may be ethylene glycol (EG).

Hereinafter, a case where the polyester is PET, the reaction solvent M is methanol, the monomer D is DMT, and the monomer E is EG will be described as an example.

### (First embodiment)

### (Separation system)

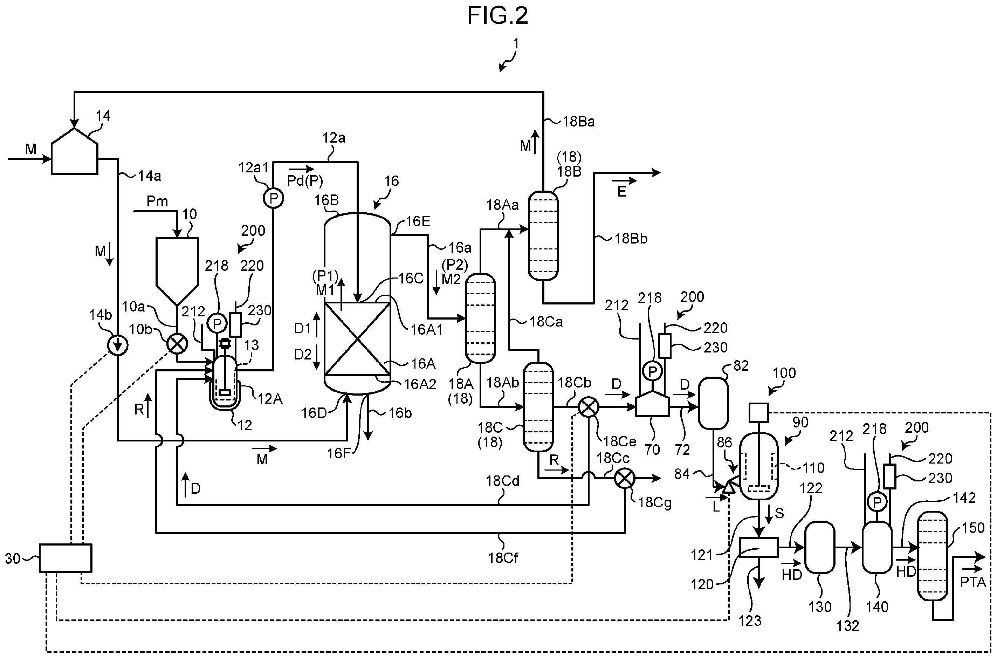

FIG. 2 is a schematic diagram of a separation system according to the first embodiment. The separation system 1 according to the first embodiment is a system that monomerizes polyester contained in the polyester raw material Pm to produce monomers D and E. As illustrated in FIG. 2, the separation system 1 includes a raw material storage section 10, a dissolution section 12, a solid-liquid separation section 13, a solvent storage section 14, a reaction section 16, a separation section 18, a control section 30, and a storage system 200.

Hereinafter, a Z direction is a vertical direction (an up-down direction). An upward direction in the vertical direction of the Z direction is defined as a Z1 direction, and a downward direction in the vertical direction is defined as a Z2 direction. Further, a horizontal direction is a direction orthogonal to the Z direction (vertical direction).

### (Raw material storage section)

The raw material storage section 10 is a vessel (hopper) into which the polyester raw material Pm is introduced and in which the polyester raw material Pm is stored. In the present embodiment, the flaked polyester raw material Pm is stored in the raw material storage section 10, but a shape and size of the polyester raw material Pm may be arbitrary. The raw material storage section 10 is connected to the dissolution section 12 via an introduction pipe 10a. The polyester raw material Pm in the raw material storage section 10 is supplied to the dissolution section 12 through the introduction pipe 10a. The introduction pipe 10a is provided with an adjustment section 10b that adjusts an amount of the polyester raw material Pm supplied from the raw material storage section 10 to the dissolution section 12. The adjustment section 10b is, for example, an on-off valve, and causes the polyester raw material Pm in the raw material storage section 10 to be supplied to the dissolution section 12 in an open state, and stops the supply of the polyester raw material Pm in the raw material storage section 10 to the dissolution section 12 in a closed state. However, the adjustment section 10b is not limited to the on-off valve, and may be any mechanism capable of adjusting the supply of the polyester raw material Pm to the dissolution section 12. Further, the polyester raw material Pm may be directly supplied to the dissolution section 12 without passing through the raw material storage section 10, the introduction pipe 10a, and the adjustment section 10b.

### (Dissolution section)

The dissolution section 12 is a vessel in which a dissolution liquid Pd is stored. The dissolution liquid Pd is a solution produced by mixing the polyester raw material Pm and the monomer D. Here, the polyester component contained in the polyester raw material Pm is dissolved in the monomer D, but impurities, which are components other than the polyester contained in the polyester raw material Pm, remain without being dissolved in the monomer D. Therefore, it can be said that the dissolution liquid Pd contains a polyester solution P, in which the polyester contained in the polyester raw material Pm is dissolved in the monomer D, and the impurities contained in the polyester raw material Pm.

The monomer D and the polyester raw material Pm are supplied to the dissolution section 12. In the dissolution section 12, while the polyester contained in the polyester raw material Pm is dissolved in the monomer D, the impurities remain without being dissolved in the monomer D, and thus a dissolution liquid Pd containing the polyester solution P and the impurities is produced. By dissolving the polyester in the monomer D in this manner, a viscosity can be reduced and fluidity can be improved, allowing the polyester to be easily discharged to the reaction section 16. Note that, the polyester solution P is not limited to a state where an entire amount of the polyester is dissolved in the monomer D, and at least a part of the polyester may remain undissolved in the monomer D. Further, in a case where there is a component that is dissolvable in the monomer D, among components other than the polyester contained in the polyester raw material Pm, the polyester solution P may also contain the component dissolved in the monomer D.

The dissolution section 12 is connected to a first reaction section 16A to be described later via an introduction pipe 12a. The dissolution liquid Pd in the dissolution section 12 passes through the introduction pipe 12a and is supplied to the first reaction section 16A. Further, the introduction pipe 12a is provided with a supply section 12a1. The supply section 12a1 is a mechanism for supplying the polyester solution P in the dissolution section 12 to the first reaction section 16A, and is a pump in the present embodiment.

In the present embodiment, the dissolution section 12 is provided with a heating section 12A. The heating section 12A heats the monomer D and the polyester raw material Pm supplied to the dissolution section 12 to a predetermined temperature by heating the inside of the dissolution section 12. The predetermined temperature is a temperature at which the polyester can be dissolved in the monomer D. By heating at a predetermined temperature in this manner, the polyester contained in the polyester raw material Pm can be appropriately dissolved in the monomer D. The predetermined temperature is preferably 140°C or higher and 300°C or lower, more preferably 160°C or higher and 280°C or lower, and still more preferably 190°C or higher and 250°C or lower. Note that, the impurities also contain a component that melts when being heated to a predetermined temperature (a temperature at which the polyester can be dissolved in the monomer D). Therefore, in a case where the impurities contain a component that melts when being heated to the predetermined temperature, the impurities are contained in the dissolution liquid Pd in a partially molten state. In the present embodiment, the heating section 12A is provided in the dissolution section 12, but a position where the heating section 12A is provided is not limited thereto and may be any position.

### (Solvent storage section)

The solvent storage section 14 is a vessel into which the reaction solvent M is introduced and in which the reaction solvent M is stored. The solvent storage section 14 is connected to the reaction section 16 via an introduction pipe 14a. The reaction solvent M in the solvent storage section 14 is supplied to the reaction section 16 through the introduction pipe 14a. More specifically, the introduction pipe 14a is provided with a heating and pressurizing section 14b that pressurizes and heats the reaction solvent M. The heating and pressurizing section 14b pressurizes and heats the reaction solvent M to bring the reaction solvent M into a supercritical state or a subcritical state (pressurized gas or pressurized liquid). The reaction solvent M in a supercritical state or a subcritical state (pressurized gas or pressurized liquid) is supplied to the reaction section 16.

### (Reaction section)

The reaction section 16 is a container into which the dissolution liquid Pd and the reaction solvent M are introduced and in which the polyester in the dissolution liquid Pd is depolymerized. The reaction section 16 includes a first reaction section 16A and a second reaction section 16B.

### (First reaction section)

The first reaction section 16A is formed in the reaction section 16. In the present embodiment, the first reaction section 16A can be said to be a portion filled with a filling material in the reaction section 16. In the first reaction section 16A, a known filling material used in a gas-liquid or liquid-liquid contact device can be used as the filling material, and for example, a filling material similar to the filling material used in a contact device for bringing heavy oil into contact with water to extract an active component can be used. Specific examples of the filling material include a pipe made of SUS or the like, a Raschig ring, a Berl saddle, a Tellerette, and a ball.

The introduction pipe 12a is connected to the first reaction section 16A. More specifically, an introduction port 16C, which is an opening of the introduction pipe 12a through which the dissolution liquid Pd from the dissolution section 12 is introduced, is connected to the first reaction section 16A. The introduction port 16C is connected to a surface 16A1 of the first reaction section 16A on a side of a first direction D1. The introduction pipe 12a is connected to the surface 16A1 such that the introduction port 16C opens toward a second direction D2 opposite to the first direction D1. As described above, in the present embodiment, the introduction port 16C that opens toward the second direction D2 is connected to the surface 16A1 of the first reaction section 16A, but the present invention is not limited thereto. For example, the introduction port 16C does not necessarily have to be directly connected to the first reaction section 16A, and the introduction port 16C that opens toward the second direction D2 may be connected on the side of the first direction D1 relative to the surface 16A1 of the first reaction section 16A in the reaction section 16.

The introduction pipe 14a is connected to the reaction section 16. More specifically, an introduction port 16D, which is an opening of the introduction pipe 14a through which the reaction solvent M from the solvent storage section 14 is introduced, is connected to the reaction section 16. The introduction port 16D is connected on the side of the second direction D2 relative to a surface 16A2 of the first reaction section 16A on the side of the second direction D2. The introduction pipe 14a is connected on the side of the second direction D2 relative to the surface 16A2 such that the introduction port 16D opens toward the first direction D1 or toward the center from a side surface. As described above, in the present embodiment, the introduction port 16D, which opens toward the first direction D1 or toward the center from the side surface, is connected on the side of the second direction D2 relative to the surface 16A2 of the first reaction section 16A, but the present invention is not limited thereto. For example, the introduction port 16D may be directly connected to the first reaction section 16A or may be connected to the surface 16A2 of the first reaction section 16A.

As described above, in the present embodiment, the introduction port 16C into which the dissolution liquid Pd is introduced opens toward the second direction D2, and the introduction port 16D into which the reaction solvent M is introduced opens toward the first direction D1 or toward the center from the side surface. Therefore, the dissolution liquid Pd and the reaction solvent M are introduced into the first reaction section 16A in directions facing each other.

The dissolution liquid Pd introduced from the introduction port 16C into the first reaction section 16A moves on the surface of the filling material of the first reaction section 16A toward the second direction D2. On the other hand, the reaction solvent M in a supercritical state or a subcritical state (pressurized gas or pressurized liquid) introduced from the introduction port 16D moves in the first reaction section 16A toward the first direction D1. In the first reaction section 16A, the reaction solvent M in a supercritical state or a subcritical state (pressurized gas or pressurized liquid) comes into contact with the dissolution liquid Pd. The polyester in the dissolution liquid Pd is depolymerized (reduced in molecular weight) by the reaction solvent M, and the depolymerized polyester is extracted into the reaction solvent M in a supercritical state or a subcritical state (pressurized gas or pressurized liquid). Hereinafter, the polyester depolymerized in the first reaction section 16A is referred to as a first depolymerized polyester P1, and a mixture of the first depolymerized polyester P1 and the reaction solvent M (the reaction solvent M into which the first depolymerized polyester P1 is extracted) is referred to as a first solvent M1. The first solvent M1 containing the first depolymerized polyester P1 travels through the first reaction section 16A to the side of the first direction D1, and is discharged to the side of the first direction D1 of the first reaction section 16A.

Note that, the first depolymerized polyester P1 includes the monomers D and E produced by depolymerizing the polyester in the dissolution liquid Pd, a monomer D originally mixed in the dissolution liquid Pd, and an oligomer produced by depolymerizing the polyester. The oligomer here can be said to be an oligomer derived from a carboxylic acid or an oligomer of an alcohol component (an oligomer derived from a carboxylic acid or an oligomer of an alcohol component having a molecular weight smaller than that of polyester) that has not been monomerized but has been depolymerized from polyester. Further, the oligomer contained in a residual substance R in the polyester solution P is also depolymerized by the reaction solvent M. Therefore, the first depolymerized polyester P1 also contains the depolymerized residual substance R. The depolymerized residual substance R is, for example, an oligomer that is contained in the residual substance and has been depolymerized or monomers D and E produced by depolymerizing the oligomer contained in the residual substance, or the like.

### (Second reaction section)

The second reaction section 16B is formed in the reaction section 16, and the second reaction section 16B is formed at a portion where the first solvent M1 is discharged from the first reaction section 16A. In the present embodiment, since the first solvent M1 is discharged to the side of the first direction D1, the second reaction section 16B can be said to be a space formed on the side of the first direction D1 of the first reaction section 16A.

In the second reaction section 16B, the first depolymerized polyester P1 contained in the first solvent M1 is further depolymerized (reduced in molecular weight) by the reaction solvent M contained in the first solvent M1. Hereinafter, the first depolymerized polyester P1 further depolymerized in the second reaction section 16B is referred to as a second depolymerized polyester P2, and a mixture of the second depolymerized polyester P2 and the reaction solvent M (the reaction solvent M in which the second depolymerized polyester P2 is dissolved) is referred to as a second solvent M2. A discharge pipe 16a is connected to the second reaction section 16B. More specifically, a discharge port 16E, which is an opening of the discharge pipe 16a through which the second solvent M2 is discharged from the second reaction section 16B, is connected to the second reaction section 16B. The second solvent M2 containing the second depolymerized polyester P2 in the second reaction section 16B is discharged from the discharge port 16E through the discharge pipe 16a to the outside of the second reaction section 16B.

Note that, the second depolymerized polyester P2 contains the monomers D and E in the first depolymerized polyester P1, monomers D and E produced by depolymerizing the oligomer in the first depolymerized polyester P1, and an oligomer produced by depolymerizing the first depolymerized polyester P1.

A discharge pipe 16b is connected to the bottom of the reaction section 16. More specifically, a discharge port 16F, which is an opening of the discharge pipe 16b through which non-extracted matter (described later) in the reaction section 16 is discharged, is connected to the bottom of the reaction section 16. From the discharge port 16F, non-extracted matter is discharged, including impurities such as metal compounds that have not been extracted into the reaction solvent M, residues of undecomposed polyester that have not been extracted into the reaction solvent M, and the like. In other words, the non-extracted matter at the bottom of the reaction section 16 is discharged from the discharge port 16F through the discharge pipe 16b to the outside of the reaction section 16. The non-extracted matter discharged from the discharge port 16F can be said to be a component of the polyester solution P that remains in the first reaction section 16A and the second reaction section 16B without being discharged to the separation section 18 as the second solvent M2 (the reaction solvent M in which the second depolymerized polyester P2 is dissolved).

Further, the reaction section 16 may be provided with a heating section that heats the inside of the reaction section 16 and a pressurizing section that maintains a pressure inside the reaction section 16 at a predetermined value or more. The temperature inside the reaction section 16 is preferably 250°C or higher and 400°C or lower, and more preferably 250°C or higher and 350°C or lower. Further, the pressure inside the reaction section 16 is preferably 1 MPa or more and 30 MPa or less, and more preferably 6 MPa or more and 25 MPa or less. The pressurizing section and the heating section may be controlled by the control section 30.

### (Separation section)

In the separation section 18, the second solvent M2 containing the second depolymerized polyester P2 is introduced, and the second solvent M2 is separated into the reaction solvent M, the monomer D derived from a carboxylic acid contained in the second depolymerized polyester P2, the monomer E of an alcohol component contained in the second depolymerized polyester P2, and the residual substance R. The separation section 18 separates the second solvent M2 into the monomer D, the monomer E, and the residual substance R by distillation. The residual substance R is a component of the second solvent M2 other than the reaction solvent M, the monomer D, and the monomer E, and contains an oligomer.

In the present embodiment, the separation section 18 includes a first separation section 18A, a second separation section 18B, and a third separation section 18C.

The first separation section 18A is a separation column connected to the discharge pipe 16a. The second solvent M2 containing the second depolymerized polyester P2 is introduced into the first separation section 18A through the discharge pipe 16a. The first separation section 18A separates the second solvent M2 into a low-boiling component and a high-boiling component having a boiling point higher than that of the low-boiling component. For example, in the first separation section 18A, the second solvent M2 may be set to a predetermined temperature, a component that has turned into a gas may be taken as a low-boiling component, and a liquid component may be taken as a high-boiling component. Discharge pipes 18Aa and 18Ab are connected to the first separation section 18A. The low-boiling component is discharged from the discharge pipe 18Aa, and the high-boiling component is discharged from the discharge pipe 18Ab.

The second separation section 18B is a separation column connected to the first separation section 18A via the discharge pipe 18Aa. The low-boiling component is introduced into the second separation section 18B through the discharge pipe 18Aa. The second separation section 18B separates the low-boiling component into the reaction solvent M and the monomer E. Discharge pipes 18Ba and 18Bb are connected to the second separation section 18B. The reaction solvent M is discharged from the discharge pipe 18Ba, and the monomer E is discharged from the discharge pipe 18Bb. Note that the discharge pipe 18Ba is connected to the second separation section 18B and the solvent storage section 14. Therefore, the reaction solvent M discharged from the second separation section 18B is returned to the solvent storage section 14 and reused for depolymerization of polyester.

The third separation section 18C is a separation column connected to the first separation section 18A via the discharge pipe 18Ab. The high-boiling component is introduced into the third separation section 18C through the discharge pipe 18Ab. The third separation section 18C separates the high-boiling component into a further higher-boiling residual substance, a low-boiling component containing the reaction solvent M and the monomer E, and the monomer D. Discharge pipes 18Ca, 18Cb, and 18Cc are connected to the third separation section 18C. The discharge pipe 18Ca is connected to the second separation section 18B. The low-boiling component separated in the third separation section 18C is discharged to the second separation section 18B through the discharge pipe 18Ca. Further, the monomer D separated in the third separation section 18C is discharged from the discharge pipe 18Cb and introduced into the temporary storage section 70. The residual substance separated in the third separation section 18C is discharged from the discharge pipe 18Cc.

An introduction pipe 18Cd is connected to the third separation section 18C. The introduction pipe 18Cd is also connected to the dissolution section 12, and introduces the monomer D discharged from the third separation section 18C into the dissolution section 12. In the example of FIG. 2, the introduction pipe 18Cd branches off from the discharge pipe 18Cb. The introduction pipe 18Cd is provided with an adjustment section 18Ce that adjusts the amount of the monomer D supplied from the third separation section 18C to the dissolution section 12. The adjustment section 18Ce is, for example, an on-off valve, and causes the monomer D to be supplied to the dissolution section 12 in the open state, and stops the supply of the monomer D to the dissolution section 12 in the closed state. However, the adjustment section 18Ce is not limited to the on-off valve, and may be any mechanism capable of adjusting the supply of the monomer D to the dissolution section 12. Note that, in the present embodiment, the adjustment section 18Ce is provided at a branching portion of the introduction pipe 18Cd from the discharge pipe 18Cb, but the position where the adjustment section 18Ce is provided is not limited thereto and may be arbitrary. Further, the introduction pipe 18Cd does not necessarily have to be connected to the discharge pipe 18Cb, and may be directly connected to the third separation section 18C. Also, for example, a storage section (vessel) for storing the monomer D may be provided in the discharge pipe 18Cb, and the introduction pipe 18Cd may be connected to the storage section.

An introduction pipe 18Cf is connected to the third separation section 18C. The introduction pipe 18Cf is also connected to the dissolution section 12, and introduces the residual substance R discharged from the third separation section 18C into the dissolution section 12. In the example of FIG. 2, the introduction pipe 18Cf branches off from the discharge pipe 18Cc. The introduction pipe 18Cf is provided with an adjustment section 18Cg that adjusts the amount of the residual substance R supplied from the third separation section 18C to the dissolution section 12. The adjustment section 18Cg is, for example, an on-off valve, and causes the residual substance R to be supplied to the dissolution section 12 in the open state, and stops the supply of the residual substance R to the dissolution section 12 in the closed state. However, the adjustment section 18Cg is not limited to the on-off valve, and may be any mechanism capable of adjusting the supply of the residual substance R to the dissolution section 12. Note that, in the present embodiment, the adjustment section 18Cg is provided at the branching portion of the introduction pipe 18Cf from the discharge pipe 18Cc, but the position where the adjustment section 18Cg is provided is not limited thereto and may be arbitrary. Further, the introduction pipe 18Cf does not necessarily have to be connected to the discharge pipe 18Cc, and may be directly connected to the third separation section 18C.

Note that, for example, a storage section (vessel) for storing the residual substance R may be provided in the discharge pipe 18Cc, and the introduction pipe 18Cf may be connected to the storage section. Further, the introduction pipe 18Cf may be provided with a filter that collects foreign matter in the residual substance R while allowing an oligomer in the residual substance R to pass through.

### (Temporary storage section)

The temporary storage section 70 is, for example, a tank, and temporarily stores the monomer D supplied from the third separation section 18C. The temporary storage section 70 is connected to the third separation section 18C via the discharge pipe 18Cb. The temporary storage section 70 is connected to a dissolution vessel 82 via a discharge pipe 72. The temporary storage section 70 supplies the temporarily stored monomer D to the dissolution vessel 82.

### (Dissolution vessel)

The dissolution vessel 82 is a tank and stores a dissolution liquid L in which the monomer D has been dissolved. The dissolution vessel 82 is connected to the temporary storage section 70 via the discharge pipe 72. The monomer D containing impurities, which has been separated by the third separation section 18C, is introduced into the dissolution vessel 82 from the temporary storage section 70. Further, a solvent for dissolving the monomer D is introduced into the dissolution vessel 82. As a result, in the dissolution vessel 82, the monomer D is dissolved in the solvent and stored as the dissolution liquid L. Note that any liquid may be used as the solvent, but methanol is used in the present embodiment.

The dissolution vessel 82 is connected to the adjustment section 86 and the crystallization vessel 90 via an introduction pipe 84. The dissolution liquid L stored in the dissolution vessel 82 is introduced into the crystallization vessel 90 through the introduction pipe 84 and the adjustment section 86. Note that the dissolution vessel 82 is located in the Z1 direction (vertically upward) relative to the crystallization vessel 90 to be described later. However, a positional relationship between the dissolution vessel 82 and the crystallization vessel 90 in the Z direction is not limited thereto and may be arbitrary.

### (Introduction pipe)

The introduction pipe 84 extends downward from the dissolution vessel 82 toward the crystallization vessel 90. The introduction pipe 84 connects the dissolution vessel 82 and an opening portion of the crystallization vessel 90. The dissolution liquid L in the dissolution vessel 82 flows into the crystallization vessel 90 through the introduction pipe 84 and the adjustment section 86.

### (Adjustment section)

The adjustment section 86 is a device that reduces the pressure of the dissolution liquid L. The adjustment section 86 is connected to the introduction pipe 84 and the crystallization vessel 90. The adjustment section 86 reduces the pressure of the dissolution liquid L introduced from the dissolution vessel 82 through the introduction pipe 84, and introduces the dissolution liquid L under reduced pressure into the crystallization vessel 90.

The adjustment section 86 is a pressure reducing valve in the present embodiment. The adjustment section 86 may have any structure as long as it is a pressure reducing valve, but is an angle valve in the present embodiment. In the present embodiment, the adjustment section 86 is directly connected to the crystallization vessel 90.

The dissolution liquid L introduced into the adjustment section 86 is introduced into the crystallization vessel 90 in a state where the pressure has been reduced by the adjustment section 86. Since the temperature of the dissolution liquid L reduced in pressure decreases, the monomer HD which is an object to be separated is crystallized from the reduced-pressure dissolution liquid L.

Note that, in the present embodiment, the adjustment section 86 is directly connected to the crystallization vessel 90, but the present invention is not limited thereto, and a pipe connecting the adjustment section 86 and the crystallization vessel 90 may be provided between the adjustment section 86 and the crystallization vessel 90.

### (Crystallization vessel)

The crystallization vessel 90 is a vessel into which the dissolution liquid L reduced in pressure by the adjustment section 86 is introduced, and in which an object to be separated (here, the monomer HD) is crystallized from the dissolution liquid L. The dissolution liquid L reduced in pressure by the adjustment section 86 is introduced into the crystallization vessel 90. In this manner, the dissolution liquid L reduced in pressure is introduced into the crystallization vessel 90, and the dissolution liquid L is stored under reduced pressure. In other words, the crystallization vessel 90 can be said to be a flash-type crystallization vessel in which an internal pressure is reduced more than an external pressure.

The crystallization vessel 90 is connected to a discharge pipe 121 for discharging the slurry S. Note that, the slurry S is a slurry containing the crystallized monomer HD and the dissolution liquid L from which the monomer HD has been removed.

A baffle 110 that straightens the flow of the dissolution liquid L in the crystallization vessel 90 is provided inside the crystallization vessel 90. Although the shape, mounting position, and number of the baffle 110 are arbitrary, in the present embodiment, the baffle 110 is provided on an inner wall surface of the crystallization vessel 90, and more specifically, is a plate-like member extending in the Z direction on an inner wall surface of a side wall 90b. However, the baffle 110 is not an essential component, and does not necessarily have to be provided in the crystallization vessel 90.

### (Stirring section)

The stirring section 100 is provided in the crystallization vessel 90, and is a device that rotates to stir the inside of the crystallization vessel 90 when a drive section (for example, a motor) is driven. In the present embodiment, a stirring blade is located on the side of the Z2 direction relative to the adjustment section 86. Further, the stirring blade is located on the side of the Z1 direction relative to a bottom surface portion of the crystallization vessel 90 and is provided at a position facing the bottom surface portion (that is, a position overlapping the bottom surface portion as viewed from the Z direction). Further, the stirring section 100 is preferably provided at a central position of the crystallization vessel 90 when viewed from the Z direction. In other words, it is preferable that the central axis of the stirring section 100 and the central axis of the crystallization vessel 90 coincide with each other.

### (Solid-liquid separation section)

The solid-liquid separation section 120 is connected to the crystallization vessel 90 via the discharge pipe 121. The slurry S (the dissolution liquid L in which the monomer HD has crystallized) produced in the crystallization vessel 90 is introduced into the solid-liquid separation section 120 from the crystallization vessel 90 through the discharge pipe 121. The solid-liquid separation section 120 performs solid-liquid separation on the introduced slurry S. The solid-liquid separation section 120 separates the slurry S into an object to be separated which is a solid component, and a liquid component. In the present embodiment, the solid-liquid separation section 120 separates the slurry S into the monomer HD and the dissolution liquid L from which the monomer HD has been removed. The dissolution liquid L from which the monomer HD has been removed is discharged from a discharge pipe 123 connected to the solid-liquid separation section 120 and processed. The solid-liquid separation section 120 is, for example, a centrifugal separator, and may separate the object to be separated from the dissolution liquid L by centrifugal separation in which the inside of the solid-liquid separation section 120 is stirred around a predetermined axis and the object to be separated is moved radially outward of the rotation axis. The solid-liquid separation section 120 is not limited to centrifugal separation as long as the object to be separated can be separated from the dissolution liquid L. For example, the solid-liquid separation section 120 may separate the object to be separated from the dissolution liquid L by a filter.

### (Melting vessel)

A melting vessel 130 is connected to the solid-liquid separation section 120 via a discharge pipe 122. Further, the melting vessel 130 is connected to a molten product temporary storage tank 140 via a supply pipe 132. The melting vessel 130 melts (melts) the high-purity monomer HD obtained by solid-liquid separation from the slurry S. The melting vessel 130 melts the monomer HD into a liquid state, and supplies it to the molten product temporary storage tank 140 through the supply pipe 132.

### (Molten product temporary storage tank)

The molten product temporary storage tank 140 is connected to a hydrolysis separation reaction section 150 via a discharge pipe 142. The molten product temporary storage tank 140 is a tank that temporarily stores the monomer HD melted in the melting vessel 130. The molten product temporary storage tank 140 supplies the stored monomer HD to the hydrolysis separation reaction section 150.

The monomer HD hydrolyzed in the hydrolysis separation reaction section 150 becomes high-purity terephthalic acid (PTA). Thereafter, although not illustrated, the PTA is stored in a hopper after undergoing a crystallization process and a drying process.

### (Control section)

The control section 30 is a control device that controls the separation system 1. The control section 30 controls the adjustment section 10b to control the amount of the polyester raw material Pm supplied from the raw material storage section 10 to the dissolution section 12. Further, in a case where the solid-liquid separation section 13 includes a drive section, the control section 30 controls operation of the solid-liquid separation section 13. The control section 30 controls the supply section 12a1 to control the amount of the dissolution liquid Pd supplied from the dissolution section 12 to the reaction section 16. The control section 30 controls the heating and pressurizing section 14b to set the reaction solvent M to a supercritical state or a subcritical state (pressurized gas or pressurized liquid), and controls the amount of the reaction solvent M in the supercritical state or the subcritical state (pressurized gas or pressurized liquid) supplied to the reaction section 16. The control section 30 controls the adjustment section 18Ce to control the amount of the monomer D supplied to the dissolution section 12. The control section 30 controls the adjustment section 18Cg to control the amount of the residual substance R supplied to the dissolution section 12. The control section 30 adjusts the adjustment section 86 to control the flow rate of the dissolution liquid L into the crystallization vessel 90 while reducing the pressure of the dissolution liquid L. The control section 30 controls the rotation of the stirring section 100. The control section 30 controls operation of the storage system 200 to be described later.

In the present embodiment, the control section 30 is a computer, and includes, for example, a processor including an arithmetic circuit such as a Central Processing Unit (CPU) and a storage unit that stores various types of information such as arithmetic contents by the processor and programs. The control section 30 executes control of the separation system 1 by reading programs from the storage unit.

However, the separation system 1 is not limited to being automatically controlled by the control section 30, and for example, at least a part of the processing may be controlled by an operation of a worker.

### (Operation of separation system)

Next, the operation of the separation system 1 will be described. The control section 30 controls the adjustment sections 10b and 18Ce to introduce the polyester raw material Pm and the monomer D into the dissolution section 12, and mixes the polyester raw material Pm and the monomer D in the dissolution section 12 to produce the dissolution liquid Pd. The control section 30 controls the supply section 12a1 to introduce the dissolution liquid Pd produced in the dissolution section 12 into the first reaction section 16A.

The control section 30 controls the heating and pressurizing section 14b to supply the reaction solvent M in a supercritical state or a subcritical state (pressurized gas or pressurized liquid) to the reaction section 16. The control section 30 preferably sets the reaction solvent M to 250°C or higher and 400°C or lower, and more preferably to 250°C or higher and 350°C or lower. The control section 30 preferably sets the reaction solvent M to 1 MPa or more and 30 MPa or less, and more preferably to 6 MPa or more and 25 MPa or less.

As described above, when the dissolution liquid Pd and the reaction solvent M are supplied to the reaction section 16, the polyester contained in the dissolution liquid Pd is depolymerized in the first reaction section 16A to produce the first depolymerized polyester P1. Then, in the second reaction section 16B, the first depolymerized polyester P1 is further depolymerized to produce a second solvent M2, which is a mixture of the second depolymerized polyester P2 and the reaction solvent M. The second solvent M2 is separated into the reaction solvent M, the monomer D, the monomer E, and the residual substance in the first separation section 18A, the second separation section 18B, and the third separation section 18C.

The control section 30 supplies the dissolution liquid L to the adjustment section 86 by controlling the adjustment section 86, causes the adjustment section 86 to reduce the pressure of the dissolution liquid L, and causes the dissolution liquid L reduced in pressure to be introduced into the crystallization vessel 90. Since the dissolution liquid L introduced into the crystallization vessel 90 is reduced in pressure, the monomer HD, which is an object, is crystallized from the dissolution liquid L in the crystallization vessel 90.

The control section 30 controls the storage system 200 to be described later. Specifically, the control section 30 controls switching between a cooling mechanism and a removal mechanism of the storage system, adjustment of a valve portion, driving of a drive section of the removal mechanism, and the like. Control details of the storage system 200 will be described later.

### (Storage system)

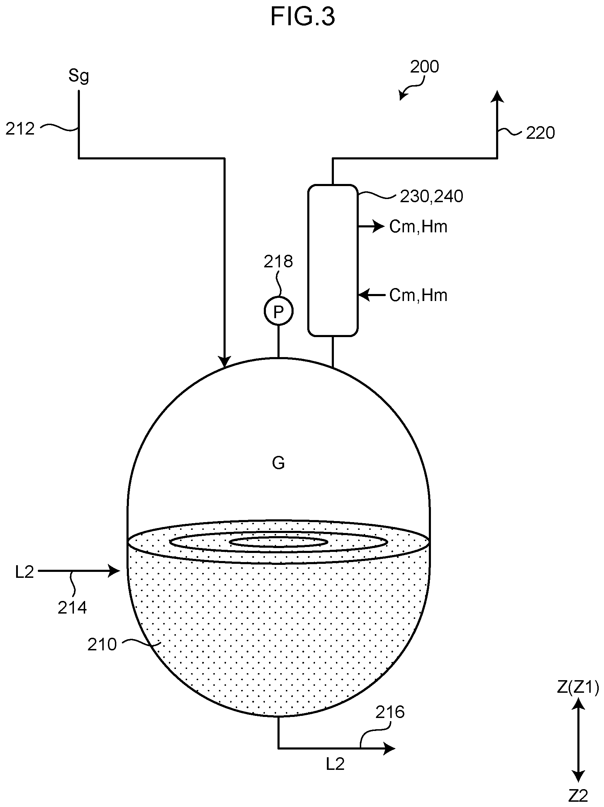

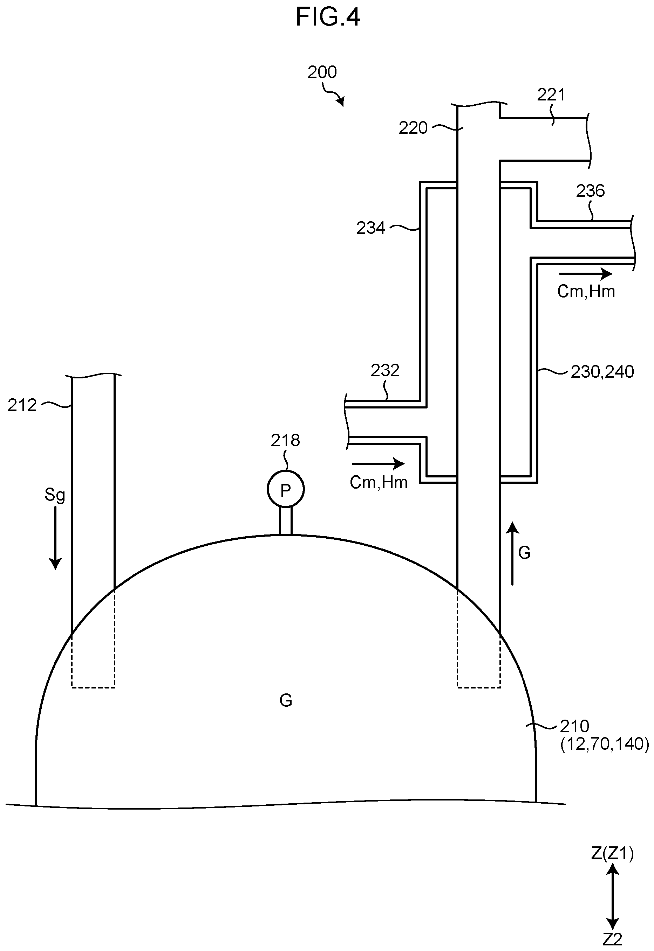

FIG. 3 is a schematic diagram illustrating the storage system according to the first embodiment. FIG. 4 is a schematic cross-sectional view of the cooling mechanism according to the first embodiment. The storage system 200 is a system that stores a target liquid, which is a liquid containing the object in a liquid state, and includes a solution vessel 210 that stores the target liquid. The object here refers to a substance to be processed in a later stage, and is, for example, a substance to be separated from other substances in a later stage. The object may be any substance to be processed in a later stage, but is, for example, a substance having sublimability. In the present embodiment, the object is the monomer D.

In the present embodiment, the storage system 200 is provided in the separation system 1 to store a target liquid containing liquid monomer D. More specifically, the storage system 200 is provided in the separation system 1 at a portion where the target liquid containing the liquid monomer D is stored. In other words, in the present embodiment, the storage system 200 is provided in at least one of the dissolution section 12 in which the dissolution liquid Pd is stored, the temporary storage section 70 in which the monomer D separated in the third separation section 18C is stored, and the molten product temporary storage tank 140 in which the monomer D (monomer HD) having a purity increased by crystallization is stored. In other words, at least one of the dissolution section 12, the temporary storage section 70, and the molten product temporary storage tank 140 can be said to be the solution vessel 210 of the storage system 200. The storage system 200 is preferably provided in all of the dissolution section 12, the temporary storage section 70, and the molten product temporary storage tank 140. However, the storage system 200 is not limited to the use of being provided in the separation system 1 to store the target liquid containing the monomer D, and may be used to store a target liquid containing an object of an arbitrary component in a liquid state. For example, the storage system 200 may be provided in a vessel that stores a target liquid containing an organic substance other than monomer D or an inorganic substance (for example, iodine).

Hereinafter, the storage system 200 according to the present embodiment will be specifically described.

As illustrated in FIG. 3, the storage system 200 includes the solution vessel 210 (the dissolution section 12, the temporary storage section 70, and the molten product temporary storage tank 140 in the present embodiment), a gas discharge pipe 220, and a cooling mechanism 230. The storage system 200 also includes a removal mechanism 240.

### (Solution vessel)

The solution vessel 210 is a tank and stores a target liquid L2 containing the object in a liquid state. A target liquid introduction pipe 214 and a target liquid discharge pipe 216 are connected to the solution vessel 210. The target liquid L2 containing the object in a liquid state is introduced into the solution vessel 210 from the target liquid introduction pipe 214, and the target liquid L2 is stored in the solution vessel 210. Further, the target liquid L2 stored in the solution vessel 210 is discharged from the target liquid discharge pipe 216. In the present embodiment, the target liquid introduction pipe 214 is connected to a side surface of the solution vessel 210, but the connection portion may be arbitrary, and may be connected to, for example, an upper surface of the solution vessel 210. The target liquid discharge pipe 216 is connected to a bottom surface of the solution vessel 210, but the connection portion may be arbitrary, and may be connected to, for example, the side surface of the solution vessel 210.

For example, in a case where the solution vessel 210 is the dissolution section 12, the introduction pipe 10a is the target liquid introduction pipe 214, the introduction pipe 12a is the target liquid discharge pipe 216, and the dissolution liquid Pd in which the monomer D, which is the object in a liquid state, and the polyester raw material Pm have been dissolved, is supplied to and stored in the solution vessel 210. Further, for example, in a case where the solution vessel 210 is the temporary storage section 70, the discharge pipe 18Cb is the target liquid introduction pipe 214, the discharge pipe 72 is the target liquid discharge pipe 216, and the monomer D, which is the object in a liquid state, is supplied to and stored in the solution vessel 210. Further, for example, in a case where the solution vessel 210 is the molten product temporary storage tank 140, the supply pipe 132 is the target liquid introduction pipe 214, the discharge pipe 142 is the target liquid discharge pipe 216, and the monomer HD, which is the object in a liquid state, is supplied to and stored in the solution vessel 210.

Further, the solution vessel 210 is provided with a pressure gauge 218. The pressure gauge 218 is a sensor that is provided in the solution vessel 210 to measure the pressure in the solution vessel 210. In the present embodiment, the pressure gauge 218 is provided on the upper surface of the solution vessel 210, but may be provided at any position where the pressure in the solution vessel 210 can be measured.

### (Gas supply pipe)

A gas supply pipe 212 is connected to the solution vessel 210. The gas supply pipe 212 is a pipe that supplies a seal gas Sg into the solution vessel 210. In the present embodiment, the gas supply pipe 212 is connected to, for example, the upper surface of the solution vessel 210, but the connection position is not limited thereto and may be arbitrary. From the gas supply pipe 212, the seal gas Sg is continuously supplied into the solution vessel 210. The seal gas Sg is a gas that does not react with the object (monomer D), and may be, for example, nitrogen gas or a noble gas (such as argon), and is nitrogen gas in the present embodiment.

### (Gas discharge pipe)

The gas discharge pipe 220 is connected to the solution vessel 210. The gas discharge pipe 220 is a pipe that is connected to the solution vessel 210 to discharge the gas in the solution vessel 210. In the present embodiment, the gas discharge pipe 220 is connected to the upper surface of the solution vessel 210, but the connection position is not limited thereto and may be arbitrary. Note that, as illustrated in FIG. 4, the gas discharge pipe 220 is connected to a side pipe 221. In this case, the gas in the solution vessel 210 is introduced into the side pipe 221 from the gas discharge pipe 220 and discharged to the outside from the side pipe 221. The side pipe 221 extends in a direction intersecting the gas discharge pipe 220. However, the side pipe 221 is not an essential component, and the gas discharge pipe 220 may be directly connected to the outside.

### (Gas discharge)

In this manner, the seal gas Sg is supplied from the gas supply pipe 212 to the solution vessel 210, and the gas in the solution vessel 210 is discharged from the gas discharge pipe 220. Therefore, the air existing in the solution vessel 210 is pushed out by the supply of the seal gas Sg and discharged from the gas discharge pipe 220. Since the object (for example, the monomer D) stored in the solution vessel 210 may react with oxygen and deteriorate, discharge of oxygen contained in the air by the seal gas Sg in this manner can suppress deterioration of the object. Note that the seal gas Sg supplied to the solution vessel 210 is also discharged from the gas discharge pipe 220. Hereinafter, the gas discharged from the gas discharge pipe 220 is appropriately referred to as a gas G.

Here, at least a part of the object (for example, the monomer D) in the solution vessel 210 may vaporize. The vaporized object is contained in the gas G and discharged from the gas discharge pipe 220. However, since the object has high sublimability, in a case where a low-temperature section occurs in the gas discharge pipe 220 due to, for example, the influence of the external environment or the like, the vaporized object may solidify in the section, potentially blocking the gas discharge pipe 220. This may make it impossible to appropriately store the liquid containing the object. On the other hand, in the present embodiment, the cooling mechanism 230 actively cools the inside of the gas discharge pipe 220 to solidify the object. In other words, when the object solidifies at an unexpected portion in the gas discharge pipe 220, it becomes difficult to grasp the position of the solidified object, and it becomes difficult to remove the solidified object. On the other hand, by solidifying the object at a predetermined portion by the cooling mechanism 230, the position of the solidified object can be grasped, the solidified object can be appropriately removed, and blockage of the gas discharge pipe 220 can be appropriately suppressed.

### (Cooling mechanism)

The cooling mechanism 230 is a mechanism that cools a partial section of the gas discharge pipe 220 to precipitate the object in a gaseous state contained in the gas as a solid. The cooling mechanism 230 is provided in a partial section of the gas discharge pipe 220. The partial section of the gas discharge pipe 220 in which the cooling mechanism 230 is provided may be an arbitrary position in the entire section of the gas discharge pipe 220, but for example, is preferably a section on the side connected to the solution vessel 210 relative to a midpoint position in an axial direction of the gas discharge pipe 220, and is more preferably near an end portion of the gas discharge pipe 220 connected to the solution vessel 210. Further, in a case where the side pipe 221 is connected to the gas discharge pipe 220, the partial section is preferably located between the end portion of the gas discharge pipe 220 connected to the solution vessel 210 and the connection portion of the side pipe 221.

The cooling mechanism 230 may have any structure, but in the present embodiment, the cooling mechanism is a tubular member surrounding a partial section of the gas discharge pipe 220. More specifically, as illustrated in FIGS. 3 and 4, the cooling mechanism 230 includes an introduction pipe 232, a pipe portion 234, and a discharge pipe 236.

The pipe portion 234 is a tubular member that surrounds the partial section of the gas discharge pipe 220. The introduction pipe 232 is a pipe connected to the pipe portion 234. The discharge pipe 236 is a pipe connected to a portion of the pipe portion 234 different from the portion where a refrigerant introduction pipe is connected to. In the cooling mechanism 230, a refrigerant Cm is introduced from the introduction pipe 232 into the pipe portion 234. The partial section of the gas discharge pipe 220 is cooled by the refrigerant Cm in the pipe portion 234. The refrigerant Cm in the pipe portion 234 is discharged from the discharge pipe 236. For example, a heat exchanger that cools the refrigerant Cm by heat exchange is provided between the introduction pipe 232 and the discharge pipe 236, and the refrigerant Cm that has cooled the gas discharge pipe 220 in the pipe portion 234 is cooled by the heat exchanger via the discharge pipe 236 and is introduced into the pipe portion 234 from the introduction pipe 232. Note that the refrigerant Cm may be any medium capable of cooling and solidifying the object (the monomer D in this example) in a gaseous state, and may be, for example, water.

As described above, by cooling a partial section of the gas discharge pipe 220 by the cooling mechanism 230, the object (monomer D in this example) in a gaseous state contained in the gas G flowing through the gas discharge pipe 220 solidifies due to cooling and precipitates on the inner wall surface of the partial section of the gas discharge pipe 220. Note that, the cooling mechanism 230 is not limited to a tubular member through which the refrigerant Cm flows, and may be any mechanism capable of cooling a partial section of the gas discharge pipe 220.

### (Removal mechanism)

The removal mechanism 240 is a mechanism that removes the object in a solid state precipitated in a partial section of the gas discharge pipe 220.

The removal mechanism 240 may have any structure, but in the present embodiment, the removal mechanism is a tubular member surrounding a partial section of the gas discharge pipe 220. More specifically, the removal mechanism 240 of the present embodiment shares its structure with the cooling mechanism 230, and the cooling mechanism 230 and the removal mechanism 240 constitute an integrated device. In other words, the removal mechanism 240 of the present embodiment includes the introduction pipe 232, the pipe portion 234, and the discharge pipe 236. In the removal mechanism 240, a heat medium Hm is introduced from the introduction pipe 232 to the pipe portion 234. The partial section of the gas discharge pipe 220 is heated by the heat medium Hm in the pipe portion 234. The heat medium Hm in the pipe portion 234 is discharged from the discharge pipe 236. For example, the introduction pipe 232 and the discharge pipe 236 are provided with a heat exchanger that heats the heat medium Hm by heat exchange, and the heat medium Hm after heating the gas discharge pipe 220 in the pipe portion 234 is cooled by the heat exchanger via the discharge pipe 236 and is introduced into the pipe portion 234 from the introduction pipe 232. Note that the heat medium Hm may be any medium capable of heating and liquefying the object in a solid state (the monomer D in this example), and may be, for example, water.

As described above, by heating a partial section of the gas discharge pipe 220 by the removal mechanism 240, the object in a solid state (monomer D in this example) precipitated in the partial section of the gas discharge pipe 220 liquefies and is removed from the inside of the gas discharge pipe 220. For example, in the present embodiment, the gas discharge pipe 220 extends vertically upward from the solution vessel 210 toward a partial section (a section where the cooling mechanism 230 and the removal mechanism 240 are provided). Therefore, the object which is liquefied flows vertically downward in the gas discharge pipe 220 and is returned into the solution vessel 210.

Note that the removal mechanism 240 is not limited to a tubular member through which the heat medium Hm flows, and may be any mechanism capable of removing the object in a solid state from a partial section of the gas discharge pipe 220. Further, the removal mechanism 240 is not limited to sharing its structure with the cooling mechanism 230, and may be a separate device. Further, the removal mechanism 240 is not an essential configuration. For example, even when the removal mechanism 240 is not provided, the object in a solid state precipitated in a partial section of the gas discharge pipe 220 can be removed from the gas discharge pipe 220 by a worker manually removing the object in a solid state.

### (Control of cooling mechanism and removal mechanism)

Next, a method for controlling the cooling mechanism 230 and the removal mechanism 240 in the present embodiment will be described. The cooling mechanism 230 and the removal mechanism 240 are controlled by the control section 30.

The control section 30 supplies the seal gas Sg to the solution vessel 210 through the gas supply pipe 212. The gas G in the solution vessel 210 is discharged from the gas discharge pipe 220. The control section 30 controls the cooling mechanism 230 to cool a partial section of the gas discharge pipe 220. In the present embodiment, the control section 30 causes the refrigerant Cm to be supplied to the pipe portion 234, and causes the refrigerant Cm to cool the partial section of the gas discharge pipe 220. As a result, the object (monomer D in this example) in a gaseous state contained in the gas G solidifies and precipitates in the partial section of the gas discharge pipe 220.

When a predetermined amount or more of the object in a solid state has precipitated in the partial section of the gas discharge pipe 220, the control section 30 stops cooling by the cooling mechanism 230 and controls the removal mechanism 240 to remove the object in a solid state from the gas discharge pipe 220. In the present embodiment, when a predetermined amount or more of the object in a solid state has precipitated, the control section 30 stops the supply of the refrigerant Cm to the pipe portion 234 and supplies the heat medium Hm to the pipe portion 234. As a result, the partial section of the gas discharge pipe 220 is heated, the precipitated object in a solid state liquefies, flows out from the gas discharge pipe 220, and is removed. Note that, in the present embodiment, when a predetermined amount or more of the object in a solid state has precipitated, the control section 30 stops cooling by the cooling mechanism 230 and also stops operation of the solution vessel 210. Stopping the operation of the solution vessel 210 refers to stopping the supply of the seal gas Sg to the solution vessel 210, stopping the supply of the target liquid L2 to the solution vessel 210, and stopping the discharge of the target liquid L2 from the solution vessel 210.

Note that a criterion for determining whether a predetermined amount or more of the object in a solid state has precipitated (criterion for stopping the cooling mechanism 230 and starting the operation of the removal mechanism 240) may be arbitrary, but in the present embodiment, the control section 30 determines whether a predetermined amount or more of the object in a solid state has precipitated from detection results of the pressure gauge 218. In other words, for example, in a case where a pressure value detected by the pressure gauge 218 is higher than a predetermined threshold, the control section 30 determines that a predetermined amount or more of the object in a solid state has precipitated, stops cooling by the cooling mechanism 230, and starts control of the removal mechanism 240. On the other hand, in a case where the pressure value detected by the pressure gauge 218 is equal to or lower than the predetermined threshold, the control section 30 determines that a predetermined amount or more of the object in a solid state has not precipitated, and continues cooling by the cooling mechanism 230. Further, when the object in a solid state has been removed by the removal mechanism 240, the control section 30 may stop removal (heating) by the removal mechanism 240 and restart cooling by the cooling mechanism 230. Note that, the threshold of the pressure here may be arbitrarily set.

### (Effects of first embodiment)

In the present embodiment, the cooling mechanism 230 actively cools the inside of the gas discharge pipe 220 to solidify the object. In other words, when the object solidifies at an unexpected portion in the gas discharge pipe 220, it becomes difficult to grasp the position of the solidified object, and it becomes difficult to remove the solidified object. On the other hand, by solidifying the object at a predetermined portion by the cooling mechanism 230, the position of the solidified object can be grasped, the solidified object can be appropriately removed, and blockage of the gas discharge pipe 220 can be appropriately suppressed. Further, in the storage system 200 according to the present embodiment, the cooling mechanism 230 is provided in a partial section of the gas discharge pipe 220 (for example, near the solution vessel 210), the refrigerant Cm is caused to flow through the cooling mechanism 230 to precipitate the object in a gaseous state contained in the gas G in the solution vessel 210 as a solid, after which the system switches to the removal mechanism 240. In the storage system 200, the heat medium Hm flows through the removal mechanism 240 to heat the partial section of the gas discharge pipe 220, thereby melting the object precipitated as a solid and causing the object to be stored in the solution vessel 210. As a result, the storage system 200 precipitates the object in the partial section of the gas discharge pipe 220 and melts the precipitated object in a solid state, so that the object which is liquefied can be returned to the solution vessel 210. In other words, it is possible to suppress precipitation of the object in sections beyond the partial section of the gas discharge pipe 220. Therefore, a liquid containing the object can be appropriately stored.

### (Second embodiment)

In the first embodiment, the cooling mechanism 230 stopped the operation of the solution vessel 210 when switching to the removal mechanism 240. The second embodiment is different from the first embodiment in that a plurality of cooling mechanisms 230 and a plurality of removal mechanisms 240 are provided, respectively. Components having the same functions as those in the first embodiment are denoted by the same reference numerals, and detailed descriptions thereof will be omitted.

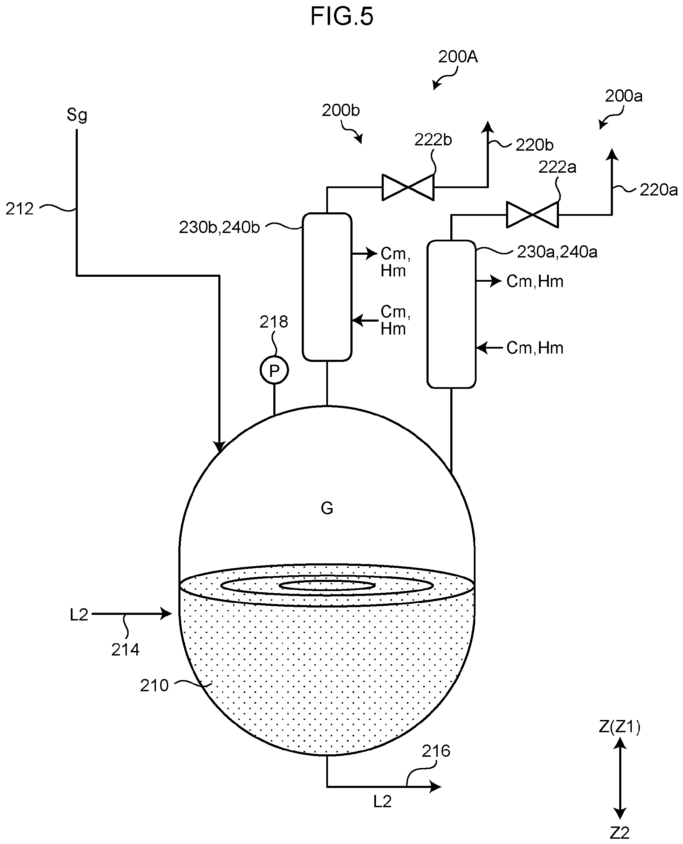

FIG. 5 is a schematic diagram illustrating a storage system according to the second embodiment.

A storage system 200A according to the second embodiment includes a solution vessel 210, a gas discharge pipe 220a, a gas discharge pipe 220b, a cooling mechanism 230a, and a cooling mechanism 230b. Further, the storage system 200 includes a removal mechanism 240a and a removal mechanism 240b.

### (Gas discharge pipe)

The gas discharge pipe 220a has a valve portion 222a. The valve portion 222a is, for example, an on-off valve, and controls the flow of the gas G in the solution vessel 210. In the present embodiment, the control section 30 opens the valve portion 222a when a valve portion 222b of the gas discharge pipe 220b is in the closed state, and closes the valve portion 222a when a valve portion 222b is in the open state. When the valve portion 222a is in the open state, the gas G in the solution vessel 210 flows through the gas discharge pipe 220a and is discharged to the outside.

The gas discharge pipe 220b has a valve portion 222b. The valve portion 222b is, for example, an on-off valve, and controls the flow of the gas G in the solution vessel 210. In the present embodiment, the control section 30 opens the valve portion 222b when the valve portion 222a is in the closed state, and opens the valve portion 222a when the valve portion 222b is in the closed state. When the valve portion 222b is in the open state, the gas G in the solution vessel 210 flows through the gas discharge pipe 220b and is discharged to the outside.

### (Cooling mechanism)

Differences between the cooling mechanism 230a and the cooling mechanism 230b in the second embodiment and the cooling mechanism 230 in the first embodiment will be described.

The cooling mechanism 230a is provided in a partial section of the gas discharge pipe 220a to cool the partial section of the gas discharge pipe 220a. When the valve portion 222a is in the open state, the cooling mechanism 230a is supplied with the refrigerant Cm under the control of the control section 30, thereby cooling the partial section of the gas discharge pipe 220a, and precipitating the object in a solid state in the gas discharge pipe 220a.

The cooling mechanism 230b is provided in a partial section of the gas discharge pipe 220b to cool the partial section of the gas discharge pipe 220b. When the valve portion 222b is in the open state, the cooling mechanism 230b is supplied with the refrigerant Cm under the control of the control section 30, thereby cooling the partial section of the gas discharge pipe 220b, and precipitating the object in a solid state in the gas discharge pipe 220b.

### (Removal mechanism)

Differences between the removal mechanism 240a and the removal mechanism 240b in the second embodiment and the removal mechanism 240 in the first embodiment will be described.

The removal mechanism 240a is provided in the partial section of the gas discharge pipe 220a, and removes the object in a solid state precipitated in the partial section of the gas discharge pipe 220a. When the valve portion 222a is in the closed state, the removal mechanism 240a causes the heat medium Hm to flow inside the removal mechanism 240a to remove the object in a solid state precipitated in the partial section of the gas discharge pipe 220a. The removal mechanism 240b is provided in the partial section of the gas discharge pipe 220b, and causes the heat medium Hm to flow inside the removal mechanism 240b when the valve portion 222b is in the closed state to remove the object in a solid state precipitated in the partial section of the gas discharge pipe 220b.

### (Control of cooling mechanism and removal mechanism)

In the second embodiment, the control section 30 causes the cooling mechanism 230a to cool the gas discharge pipe 220a while keeping the valve portion 222a of the gas discharge pipe 220a in the open state. Then, when a predetermined amount or more of the object in a solid state has precipitated in the partial section of the gas discharge pipe 220a (for example, when the pressure of the pressure gauge 218 is higher than the threshold), the control section 30 switches the valve portion 222a to the closed state and switches the valve portion 222b to the open state. With the valve portion 222a in the closed state, the control section 30 stops cooling by the cooling mechanism 230a and causes the removal mechanism 240a to remove the object in a solid state. Further, with the valve portion 222b in the open state, the control section 30 causes the cooling mechanism 230b to cool the gas discharge pipe 220b.

Thereafter, when a predetermined amount or more of the object in a solid state has precipitated in the partial section of the gas discharge pipe 220b (for example, when the pressure of the pressure gauge 218 is higher than the threshold), the control section 30 switches the valve portion 222b to the closed state and switches the valve portion 222a to the open state. With the valve portion 222b in the closed state, the control section 30 stops cooling by the cooling mechanism 230b and causes the removal mechanism 240b to remove the object in a solid state. Further, with the valve portion 222a in the open state, the control section 30 causes the cooling mechanism 230a to cool the gas discharge pipe 220a.

Note that, in the above description, two gas discharge pipes, two cooling mechanisms, and two removal mechanisms are provided, but three or more gas discharge pipes, three or more cooling mechanisms, and three or more removal mechanisms may be provided. In other words, in the second embodiment, any plural number of gas discharge pipes, cooling mechanisms, and removal mechanisms may be provided.

### (Effects of second embodiment)

The storage system 200A includes a plurality of cooling mechanisms and a plurality of removal mechanisms, respectively. Therefore, while one is cooling or heating, the other can be heating or cooling. Therefore, a plant can be operated without stopping the operation of the solution vessel 210.

### (Third embodiment)

In the first embodiment, the removal mechanism 240 causes the heat medium Hm to flow therein, thereby removing the object in a solid state precipitated in the partial section of the gas discharge pipe 220. The third embodiment is different from the first embodiment in that a removal mechanism 300 scrapes off the object in a solid state precipitated in a partial section of the gas discharge pipe 220. Components having the same functions as those in the first embodiment are denoted by the same reference numerals, and detailed descriptions thereof will be omitted.

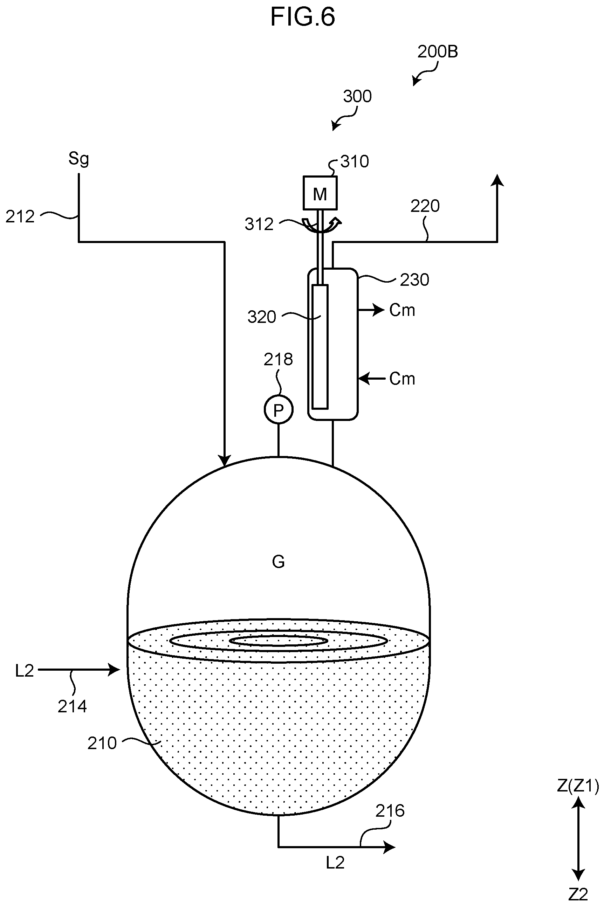

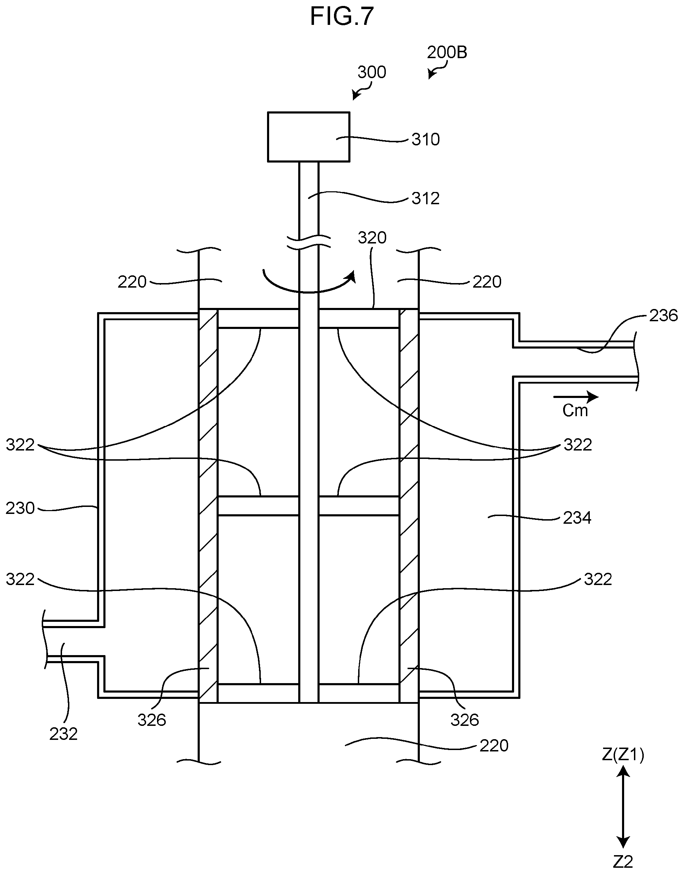

FIG. 6 is a schematic diagram illustrating a storage system according to the third embodiment. FIG. 7 is a schematic cross-sectional view of the storage system according to the third embodiment.

A storage system 200B includes a solution vessel 210, a gas discharge pipe 220, and a cooling mechanism 230. Further, the storage system 200B includes a removal mechanism 300.

### (Cooling mechanism)

Since the cooling mechanism 230 in the third embodiment has the same configuration as the cooling mechanism 230 of the first embodiment, the description thereof will be omitted. However, in the third embodiment, the cooling mechanism 230 and the removal mechanism 300 are separate devices, and the refrigerant Cm flows through the pipe portion 234 of the cooling mechanism 230, but the heat medium Hm does not flow through it.

### (Removal mechanism)

The removal mechanism 300 is a mechanism that scrapes off the object in a solid state precipitated in a partial section of the gas discharge pipe 220. In other words, in the third embodiment, the removal mechanism is a mechanism that physically removes the object in a solid state from an inner wall surface of the gas discharge pipe 220. As illustrated in FIGS. 6 and 7, the removal mechanism 300 includes a support shaft 312 and a scraping portion 320.

The support shaft 312 is a shaft-shaped member disposed in the gas discharge pipe 220. The support shaft 312 is a shaft-shaped member rotatably inserted into the gas discharge pipe 220. Note that a cross-sectional shape of the support shaft 312 may be any shape.

The scraping portion 320 is provided on the support shaft 312. In the present embodiment, the scraping portion 320 is provided at a front end of the support shaft 312. The scraping portion 320 rotates with the rotation of the support shaft 312. The scraping portion 320 scrapes off the object in a solid state precipitated on an inner wall of the gas discharge pipe 220 by rotating while being in contact with an inner wall of the gas discharge pipe 220.

The scraping portion 320 may have any shape, but in the present embodiment, it includes a support portion 322 and a scraping material 326. The support portion 322 is a rod-shaped member extending radially outward from the support shaft 312. It is preferable that a plurality of the support portions 322 are provided at equal intervals in the vertical direction. For example, in the present embodiment, six support portions 322 are provided. Note that the support portions 322 may have any structure or number. The support portion 322 may have, for example, a structure in which each support portion 322 is foldable or stretchable by a plurality of members. The radial direction here refers to a radial direction when the direction in which the gas discharge pipe 220 extends is taken as the axial direction.

The scraping material 326 is a member provided at the radially outer end portion of the support portion 322. The scraping material 326 extends along the axial direction and may be, for example, a member made of fluororesin. The scraping material 326 is provided on the support portion 322 so as to be in contact with the inner wall of the gas discharge pipe 220. In the present embodiment, two scraping materials 326 are provided. The scraping material 326 scrapes off the object in a solid state precipitated on the inner wall of the gas discharge pipe 220.

Note that, the scraping material 326 is not limited to a fluororesin member, and may be any member as long as it can scrape off the object in a solid state precipitated on the inner wall of the gas discharge pipe 220. Further, the number of scraping materials 326 may be arbitrary.

The control section 30 drives a drive section 310 (for example, a motor) provided in the removal mechanism 300 to rotate the support shaft 312. As a result, the scraping portion 320 rotates with the rotation of the support shaft 312, and scrapes off the object in a solid state precipitated in the gas discharge pipe 220. When the removal mechanism 300 is rotated in the gas discharge pipe 220, the object in a solid state in the gas discharge pipe 220 is scraped off and falls vertically downward. In other words, the object in a solid state scraped off by the removal mechanism 300 falls back into the solution vessel 210 and dissolves in the target liquid L2 stored in the solution vessel 210.

### (Modification of third embodiment)

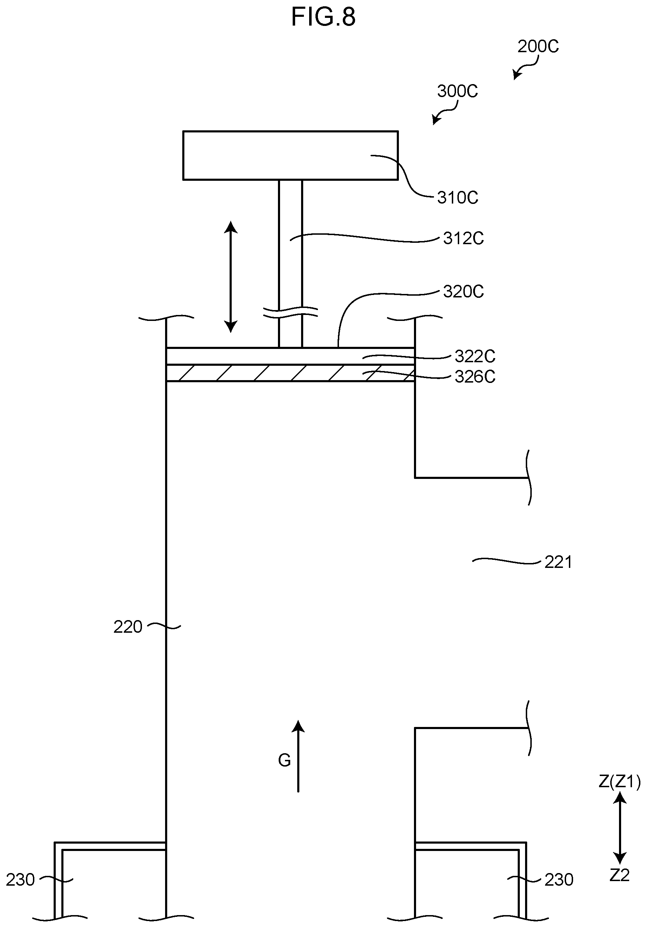

FIG. 8 is a schematic cross-sectional view of a storage system according to a modification of the third embodiment. Note that components having the same functions as those in the third embodiment are denoted by the same reference numerals, and descriptions thereof will be omitted.

### (Removal mechanism)

In the third embodiment described above, the removal mechanism 300 scrapes off the object in a solid state by rotating, but the method of scraping off the object in a solid state is not limited to rotation. For example, as illustrated in the present modification, the removal mechanism 300 may scrape off the object in a solid state by moving in the axial direction.

Specifically, as illustrated in FIG. 8, a removal mechanism 300C according to the present modification includes a drive section 310C, a support shaft 312C, and a scraping portion 320C.

The drive section 310C is, for example, a motor, and controls driving of the removal mechanism 300C. The drive section 310C may be a handle and may be operated by a worker to control driving of the removal mechanism 300C. Further, the drive section 310C may have a motor mounted in the handle. In this case, the drive section 310C may automatically control driving of the removal mechanism 300C, or the worker may operate the handle to control driving of the removal mechanism 300C.

The support shaft 312C is a shaft-shaped member disposed in the gas discharge pipe 220. The support shaft 312C is a member that can move along the axial direction of the gas discharge pipe 220. Note that the cross-sectional shape of the support shaft 312C may be any shape. Note that the axial direction here refers to the direction in which the gas discharge pipe 220 extends.

The scraping portion 320C is provided on the support shaft 312C. In the present embodiment, the scraping portion 320C is provided at the front end of the support shaft 312. The scraping portion 320C moves in the axial direction along with movement of the support shaft 312C along the axial direction. The scraping portion 320C scrapes off the object in a solid state precipitated on the inner wall of the gas discharge pipe 220 by moving in the axial direction while in contact with the inner wall of the gas discharge pipe 220.

The scraping portion 320C may have any shape, but in the present embodiment, it includes a support portion 322C and a scraping material 326C. The support portion 322C is a disk-shaped member extending radially outward from the support shaft 312C. The support portion 322C is provided such that the center of the support portion 322C overlaps the center of the support shaft 312C.

The scraping material 326C is a member provided at the front end of the support portion 322C. The scraping material 326C is a disk-shaped member extending in the radial direction. The scraping material 326C is provided such that its side surface is in contact with the inner wall of the gas discharge pipe 220 and its surface (upper surface) on the side of the support portion 322C is in contact with the support portion 322C. The scraping material 326C scrapes off the object in a solid state precipitated on the inner wall of the gas discharge pipe 220.

Note that, in the present embodiment, the scraping material 326C is a member made of fluororesin, but is not limited thereto, and may be any member as long as it can scrape off the object in a solid state precipitated on the inner wall of the gas discharge pipe 220. Further, the shape of the scraping material 326C may also be a ring shape.

The control section 30 controls, for example, the drive section 310C to move the support shaft 312C in the axial direction. The scraping portion 320C moves in the axial direction along with the movement of the support shaft 312C in a state where the scraping material 326C is in contact with the inner wall of the gas discharge pipe 220, thereby scraping the object in a solid state. Specifically, the scraping portion 320C reciprocates in the vertical direction in the gas discharge pipe 220. The scraping portion 320C descends such that a lower end of the scraping portion 320C reaches a lower end of the cooling mechanism 330 or is below the lower end of the cooling mechanism 330 in the vertical direction. As a result, the object in a solid state precipitated in the partial section of the gas discharge pipe 220 can be scraped off over the section. Further, the scraping portion 320C rises such that the lower end of the scraping portion 320C is above the side pipe 221 of the gas discharge pipe 220 in the vertical direction. In other words, the scraping portion 320C can move a distance longer than the partial section of the gas discharge pipe 220 in the axial direction along with the movement of the support shaft 312C. The scraping portion 320C can scrape off the object in a solid state over the partial section of the gas discharge pipe 220 without preventing the flow of the gas flowing in the gas discharge pipe 220 by moving a distance longer than the partial section of the gas discharge pipe 220 in the axial direction.

### (Effects of third embodiment)

The storage system 200B scrapes off the object in a solid state precipitated in the partial section of the gas discharge pipe 220 by rotational movement of the removal mechanism 300B. Since the removal mechanism 300B is provided with the scraping portion 320 that is equal to or longer than the partial section of the gas discharge pipe 220, it can scrape off the object in a solid state precipitated in the partial section of the gas discharge pipe 220 over the section. As a result, it is possible to suppress precipitation of the object in sections beyond the partial section of the gas discharge pipe 220. Therefore, a liquid containing the object can be appropriately stored.

Further, the storage system 200C scrapes off the object in a solid state precipitated in the partial section of the gas discharge pipe 220 by axial movement of the removal mechanism 300C. Since the removal mechanism 300C can move longer than the partial section of the gas discharge pipe 220 in the axial direction, it can scrape off the object in a solid state precipitated over the section. As a result, it is possible to suppress precipitation of the object in sections beyond the partial section of the gas discharge pipe 220. Therefore, a liquid containing the object can be appropriately stored.

### (Fourth embodiment)

In the third embodiment, the cooling mechanism 230 stopped the operation of the solution vessel 210 when switching to the removal mechanism 300 and the removal mechanism 300C. The fourth embodiment is different from the third embodiment in that a plurality of cooling mechanisms 230 and a plurality of removal mechanisms 300 are provided, respectively. Components having the same functions as those in the third embodiment are denoted by the same reference numerals, and detailed descriptions thereof will be omitted.

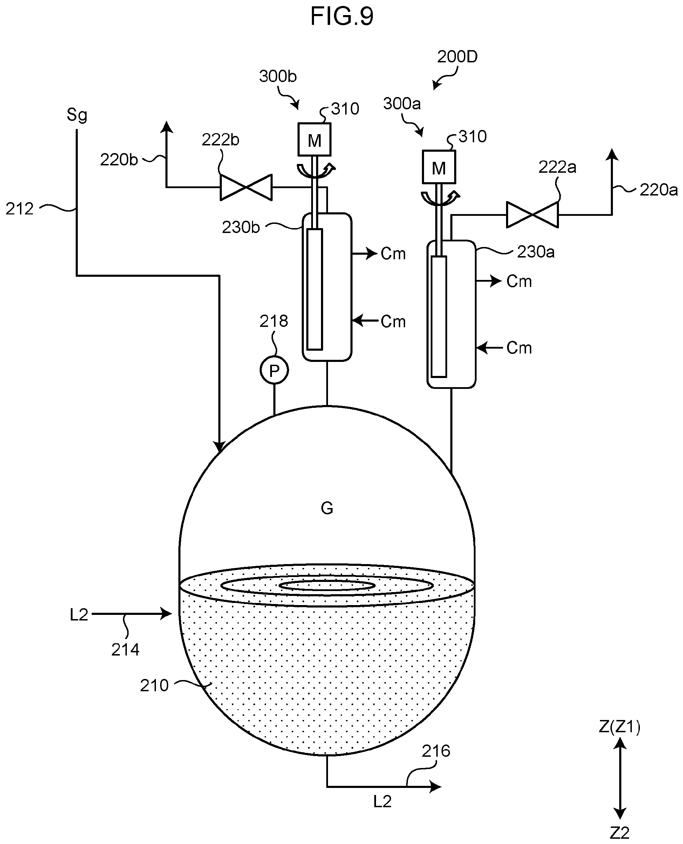

FIG. 9 is a schematic diagram illustrating a storage system according to the fourth embodiment.

A storage system 200D according to the fourth embodiment includes a solution vessel 210, a gas discharge pipe 220a, a gas discharge pipe 220b, a cooling mechanism 230a, and a cooling mechanism 230b. Further, the storage system 200 includes a removal mechanism 300a and a removal mechanism 300b.

Since the gas discharge pipe 220a and the gas discharge pipe 200b in the fourth embodiment are similar to those in the second embodiment, the descriptions thereof will be omitted.

### (Cooling mechanism)

Differences between the cooling mechanism 230a and the cooling mechanism 230b in the fourth embodiment and the cooling mechanism 230 in the third embodiment will be described.

The cooling mechanism 230a is provided in a partial section of the gas discharge pipe 220a to cool the partial section of the gas discharge pipe 220a. When the valve portion 222a is in the open state, the cooling mechanism 230a is supplied with the refrigerant Cm under the control of the control section 30, thereby cooling the partial section of the gas discharge pipe 220a, and precipitating the object in a solid state in the gas discharge pipe 220a.

The cooling mechanism 230b is provided in a partial section of the gas discharge pipe 220b to cool the partial section of the gas discharge pipe 220b. When the valve portion 222b is in the open state, the cooling mechanism 230b is supplied with the refrigerant Cm under the control of the control section 30, thereby cooling the partial section of the gas discharge pipe 220b, and precipitating the object in a solid state in the gas discharge pipe 220b.

### (Removal mechanism)

Differences between the removal mechanism 300a and the removal mechanism 300b in the fourth embodiment and the removal mechanism 300 in the third embodiment will be described.

The removal mechanism 300a is provided in a partial section of the gas discharge pipe 220a, and removes the object in a solid state precipitated in the partial section of the gas discharge pipe 220a. When the valve portion 222a is in the closed state, the removal mechanism 300a rotates to remove the object in a solid state precipitated in the partial section of the gas discharge pipe 220a. The removal mechanism 300b is provided in a partial section of the gas discharge pipe 220b, and rotates to remove the object in a solid state precipitated in the partial section of the gas discharge pipe 220b when the valve portion 222b is in the closed state.

Note that the removal mechanism 300a and the removal mechanism 300b may be the removal mechanism 300C. In this case, the removal mechanism 300C scrapes off the object in a solid state precipitated in the gas discharge pipe 220 by moving in the axial direction.

### (Control of cooling mechanism and removal mechanism)

In the fourth embodiment, the control section 30 causes the cooling mechanism 230a to cool the gas discharge pipe 220a while keeping the valve portion 222a of the gas discharge pipe 220a in the open state. Then, when a predetermined amount or more of the object in a solid state has precipitated in the partial section of the gas discharge pipe 220a (for example, when the pressure of the pressure gauge 218 is higher than the threshold), the control section 30 switches the valve portion 222a to the closed state and switches the valve portion 222b to the open state. With the valve portion 222a in the closed state, the control section 30 stops cooling by the cooling mechanism 230a and causes the removal mechanism 300a to remove the object in a solid state. Further, with the valve portion 222b in the open state, the control section 30 causes the cooling mechanism 230b to cool the gas discharge pipe 220b.

Thereafter, when a predetermined amount or more of the object in a solid state has precipitated in the partial section of the gas discharge pipe 220b (for example, when the pressure of the pressure gauge 218 is higher than the threshold), the control section 30 switches the valve portion 222b to the closed state and switches the valve portion 222a to the open state. With the valve portion 222b in the closed state, the control section 30 stops cooling by the cooling mechanism 230b and causes the removal mechanism 300b to remove the object in a solid state. Further, with the valve portion 222a in the open state, the control section 30 causes the cooling mechanism 230a to cool the gas discharge pipe 220a.

Note that, in the above description, two gas discharge pipes, two cooling mechanisms, and two removal mechanisms are provided, but three or more gas discharge pipes, three or more cooling mechanisms, and three or more removal mechanisms may be provided. In other words, in the fourth embodiment, any plural number of gas discharge pipes, cooling mechanisms, and removal mechanisms may be provided.

### (Effects of fourth embodiment)

The storage system 200D includes a plurality of cooling mechanisms and a plurality of removal mechanisms, respectively. Therefore, while one is cooling or scraping, the other can scrap or cool. Therefore, the plant can be stably operated without stopping the operation of the solution vessel 210.

### (Fifth embodiment)

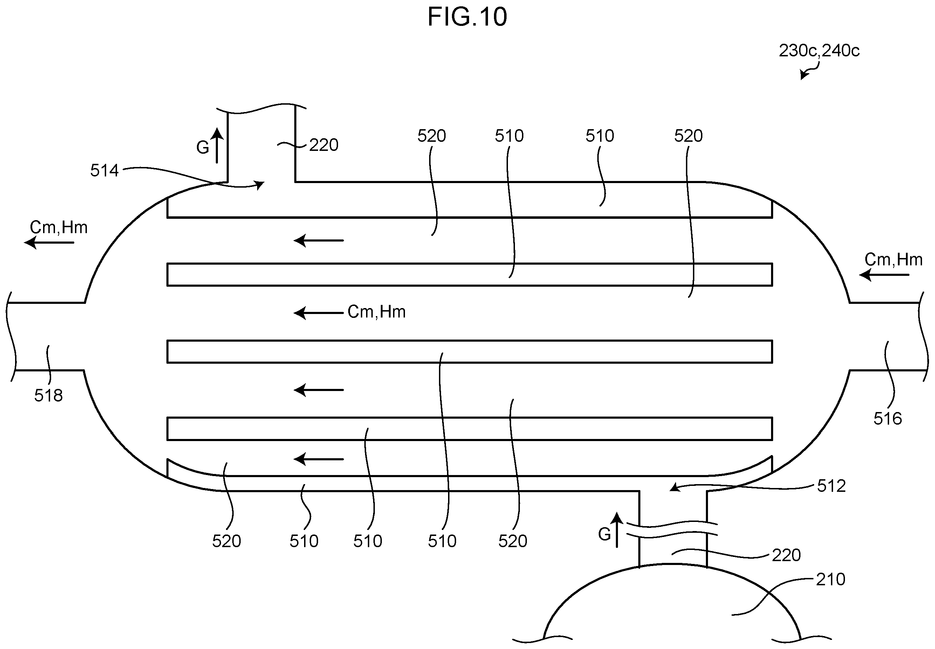

In the above embodiments, the cooling mechanism 230 includes an introduction pipe 232, a pipe portion 234, and a discharge pipe 236, and is configured to cause the refrigerant Cm to flow through the pipe portion 234. However, the fifth embodiment is different from the above embodiments in that it includes a shell 510 and a tube 520. FIG. 10 is a schematic cross-sectional view of a cooling mechanism according to the fifth embodiment.

### (Cooling mechanism)

As illustrated in FIG. 10, a cooling mechanism 230c according to the fifth embodiment is provided in the middle of a pipeline of the gas discharge pipe 220. In other words, the cooling mechanism 230c according to the fifth embodiment constitutes a partial section of the gas discharge pipe 220, and cools the partial section of the gas discharge pipe 220 by cooling the inside of the cooling mechanism 230c. The cooling mechanism 230c according to the fifth embodiment includes a shell 510 and a tube 520.

The shell 510 is a member whose interior is a cavity. An opening 512 and an opening 514 that communicate the inside with the outside are formed in the shell 510. The shell 510 is connected to a portion of the gas discharge pipe 220 closer to the solution vessel 210 than the shell 510 via the opening 512. The shell 510 is connected to a portion of the gas discharge pipe 220 on the side opposite to the solution vessel 210 (side connected to the outside) relative to the shell 510 via the opening 514.

The gas G in the solution vessel 210 is introduced into the shell 510 through the gas discharge pipe 220 and the opening 512. The gas G in the shell 510 is discharged to the outside through the opening 514 and the gas discharge pipe 220. In other words, the shell 510 constitutes a partial section of the gas discharge pipe 220.

The tube 520 is a tubular member provided in the shell 510. An introduction pipe 516 and a discharge pipe 518 are connected to the tube 520. The refrigerant Cm is introduced into the tube 520 through the introduction pipe 516. The refrigerant Cm introduced into the tube 520 cools the gas G in the shell 510. The refrigerant Cm in the tube 520 is discharged to the discharge pipe 518. For example, a heat exchanger that cools the refrigerant Cm by heat exchange is provided between the introduction pipe 516 and the discharge pipe 518, and the refrigerant Cm that has cooled the inside of the shell 510 is cooled by the heat exchanger via the discharge pipe 518 and is introduced into the introduction pipe 516 from the discharge pipe 518.

As described above, in the fifth embodiment, by cooling the shell 510 (the partial section of the gas discharge pipe 220) with the refrigerant Cm in the tube 520, the object (monomer D in this example) in a gaseous state contained in the gas G solidifies by cooling. The solidified object precipitates in the shell 510.

A removal mechanism 240c according to the present embodiment shares its structure with the cooling mechanism 230c, and the cooling mechanism 230c and the removal mechanism 240c constitute an integrated device. In other words, the removal mechanism 240c of the present embodiment includes the shell 510 and the tube 520. In the removal mechanism 240c, the heat medium Hm is introduced into the tube 520. The object in a solid state precipitated in the shell 510 is heated by the heat medium Hm flowing through the tube 520 and is liquefied. For example, a heat exchanger that heats the heat medium Hm by heat exchange is provided between the introduction pipe 516 and the discharge pipe 518, and the heat medium Hm that has heated the inside of the shell 510 is heated by the heat exchanger via the discharge pipe 518 and is introduced from the discharge pipe 518 into the introduction pipe 516.

In this manner, by heating the inside of the shell 510 by the removal mechanism 240c, the object (the monomer D in this example) in a solid state precipitated in the shell 510 liquefies and is removed.

### (Effects of the present disclosure)

A storage system according to a first aspect of the present disclosure includes a solution vessel 210 that stores a target liquid containing an object in a liquid state, a gas discharge pipe 220 that is connected to the solution vessel 210 and discharges a gas G in the solution vessel 210, and a cooling mechanism 230 that cools a partial section of the gas discharge pipe 220 to precipitate the object in a gaseous state contained in the gas as a solid.

As a result, the object can be solidified in the partial section of the gas discharge pipe where the cooling mechanism is provided, and the position of the solidified object can be grasped. In other words, it is possible to suppress precipitation of the object in a solid state in sections beyond the partial section of the gas discharge pipe. Therefore, a liquid containing the object can be appropriately stored.

A storage system according to a second aspect of the present disclosure is the storage system according to the first aspect, in which the cooling mechanism 230 is a tubular member that surrounds the partial section of the gas discharge pipe 220. The object can be solidified in the partial section of the gas discharge pipe where the cooling mechanism is provided, and the position of the solidified object can be grasped. In other words, it is possible to suppress precipitation of the object in a solid state in sections beyond the partial section of the gas discharge pipe. Therefore, a liquid containing the object can be appropriately stored.

A storage system according to a third aspect of the present disclosure is the storage system according to the second aspect, in which a refrigerant that cools the partial section of the gas discharge pipe 220 by causing the refrigerant Cm to flow flows inside the cooling mechanism 230. As a result, the object in a solid state can be precipitated by the cooling mechanism.

A storage system according to a fourth aspect of the present disclosure is the storage system according to any one of the first to third aspects, including a removal mechanism 240 that removes the object in a solid state precipitated in the partial section of the gas discharge pipe 220. As a result, the object in a solid state precipitated by the cooling mechanism can be removed.

A storage system according to a fifth aspect of the present disclosure is the storage system according to the fourth aspect, in which the removal mechanism 240 heats the partial section of the gas discharge pipe 220 to melt and remove the object in a solid state. As a result, the object in a solid state precipitated by the cooling mechanism can be melted and removed.

A storage system according to a sixth aspect of the present disclosure is the storage system according to the fifth aspect, in which the cooling mechanism 230 and the removal mechanism 240 are tubular members surrounding the partial section of the gas discharge pipe 220, the cooling mechanism 230 cools the partial section of the gas discharge pipe 220 by flowing of the refrigerant Cm inside, and the removal mechanism 240 melts and removes the object in a solid state by flowing of the heat medium Hm inside. As a result, the object in a solid state precipitated by the cooling mechanism can be melted and removed.

A storage system according to a seventh aspect of the present disclosure is the storage system according to the fourth aspect, in which the removal mechanism 300 includes a support shaft 312 disposed in the gas discharge pipe 220, and a scraping portion 320 that is provided on the support shaft 312 and scrapes off the object in a solid state precipitated in the partial section of the gas discharge pipe 220. Therefore, the object in a solid state precipitated by the cooling mechanism can be scraped off.

A storage system according to an eighth aspect of the present disclosure is the storage system according to the seventh aspect, in which the support shaft 312 is rotatable, and the scraping portion 320 scrapes off the object in a solid state by rotating with the rotation of the support shaft 312 in a state of being in contact with the inner wall of the gas discharge pipe 220. In this way, since the scraping portion has a length at least equal to the partial section of the gas discharge pipe, it can scrape off the precipitated object in a solid state over the section.

A storage system according to a ninth aspect of the present disclosure is the storage system according to the seventh aspect, in which the support shaft 312 is movable along the axial direction of the gas discharge pipe 220, and the scraping portion 320 scrapes off the object in a solid state by moving in the axial direction along with the movement of the support shaft 312 in a state of being in contact with the inner wall of the gas discharge pipe 220. In this way, since the scraping portion can move longer than the partial section of the gas discharge pipe in the axial direction, it can scrape off the precipitated object in a solid state over the section.

A storage system according to a tenth aspect of the present disclosure is the storage system according to any one of the first to ninth aspects, in which a gas supply pipe 212 that supplies a seal gas Sg that does not react with the object into the solution vessel 210 is connected to the solution vessel 210. For this reason, the seal gas can push out and discharge a component that reacts with the object from the solution vessel, and it is possible to suppress deterioration of the object.

A storage system according to an eleventh aspect of the present disclosure is the storage system according to any one of the first to tenth aspects, in which the object has sublimability. Therefore, the object in a solid state is easily precipitated by the cooling mechanism.

Although the embodiment of the present invention has been described above, embodiments are not limited to the content of the embodiment. Further, the above-described components include those that can be easily conceived by those skilled in the art, those that are substantially the same, and those in a so-called equivalent range. Furthermore, the above-described components can be appropriately combined. Furthermore, various omissions, substitutions, or modifications of the components can be made without departing from the gist of the above-described embodiment.

### Reference Signs List

1 SEPARATION SYSTEM
12 DISSOLUTION SECTION
13 SOLID-LIQUID SEPARATION SECTION
14 SOLVENT STORAGE SECTION
16 REACTION SECTION
18 SEPARATION SECTION
30 CONTROL SECTION
82 DISSOLUTION VESSEL
86 ADJUSTMENT SECTION
90 CRYSTALLIZATION VESSEL
100 STIRRING SECTION
200, 200A to 200D STORAGE SYSTEM
210 SOLUTION VESSEL
212 GAS SUPPLY PIPE
218 PRESSURE GAUGE
220, 220a, 220b GAS DISCHARGE PIPE
230, 230a, 230b COOLING MECHANISM
240, 300, 300C REMOVAL MECHANISM
510 SHELL
520 TUBE
Cm REFRIGERANT
D, E, HD MONOMER
G GAS
Hm HEAT MEDIUM
L2 TARGET LIQUID
M REACTION SOLVENT
P POLYESTER SOLUTION
Pd, L DISSOLUTION LIQUID
Pm POLYESTER RAW MATERIAL
R RESIDUAL SUBSTANCE

## Claims

1. A storage system comprising:
a solution vessel that stores a target liquid containing an object in a liquid state;
a gas discharge pipe that is connected to the solution vessel and discharges gas in the solution vessel; and
a cooling mechanism that cools a partial section of the gas discharge pipe to precipitate the object in a gaseous state contained in the gas as a solid.

2. The storage system according to claim 1, wherein the cooling mechanism is a tubular member surrounding the partial section of the gas discharge pipe.

3. The storage system according to claim 2, wherein a refrigerant that cools a partial section of the gas discharge pipe flows inside the cooling mechanism.

4. The storage system according to claim 1 or 2, comprising a removal mechanism that removes the object in a solid state precipitated in a partial section of the gas discharge pipe.

5. The storage system according to claim 4, wherein the removal mechanism heats the partial section of the gas discharge pipe to melt and remove the object in a solid state.

6. The storage system according to claim 5, wherein
the cooling mechanism and the removal mechanism are tubular members surrounding the partial section of the gas discharge pipe,
the cooling mechanism cools the partial section of the gas discharge pipe by flowing of a refrigerant inside, and
the removal mechanism melts and removes the object in a solid state by flowing of a heat medium inside.

7. The storage system according to claim 4, wherein
the removal mechanism includes a support shaft disposed in the gas discharge pipe, and a scraping portion that is provided on the support shaft and scrapes off the object in a solid state precipitated in the partial section of the gas discharge pipe.

8. The storage system according to claim 7, wherein
the support shaft is rotatable, and
the scraping portion scrapes off the object in a solid state by rotating with rotation of the support shaft in a state of being in contact with an inner wall of the gas discharge pipe.

9. The storage system according to claim 7, wherein
the support shaft is movable along an axial direction of the gas discharge pipe, and
the scraping portion scrapes off the object in a solid state by moving in the axial direction along with movement of the support shaft in a state of being in contact with an inner wall of the gas discharge pipe.

10. The storage system according to claim 1 or 2, wherein a gas supply pipe that supplies a seal gas that does not react with the object into the solution vessel is connected to the solution vessel.

11. The storage system according to claim 1 or 2, wherein the object has sublimability.
